# EUROPEAN PATENT APPLICATION

(11) **EP 4 231 374 A1**
(43) Date of publication of application: **23.08.2023**
(21) Application number: 22158103.6
(22) Date of filing: 22.02.2022
(51) Int. Cl.: H01M 4/13, H01M 4/139, H01M 10/04, H01M 10/0525, H01M 10/42, H01M 50/105, H01M 50/124, H01M 50/126, G06F 1/16, C09K 5/08, H01L 23/373

(54) **ELECTRODE ASSEMBLY WITH HEAT SPREADING LAYER, BATTERY CELL AND BATTERY EMPLOYING SUCH ELECTRODE ASSEMBLIES**

(71) Applicant: Lilium eAircraft GmbH, 82234 Wessling (DE)
(72) Inventor: NORTHWOOD, John, 80339 Munich (DE); FINKELSTEIN, David, 81245 Munich (DE); FORSTERMANN, Dominic Pascal, 80331 Munich (DE); PITRE, Ryan, 80687 Munich (DE)
(74) Representative: Feller, Frank

(57) **Abstract**

The present invention relates to an electrode assembly (100), comprising in a stacked manner a first anode layer (112), an anode current collector layer (114), a second anode layer (116), a separator layer (118), a first cathode layer (120), a cathode current collector layer (122), and a second cathode layer (124). In the electrode assembly (100) according to the present invention, the anode current collector layer (114) and/or the cathode current collector layer (122) comprises at least two conductive layers (122a, 122c) wherein between neighbouring pairs of conductive layers (122a, 122c), a respective heat spreading layer (122b) is interposed.

## Description

The present invention relates to an electrode assembly, comprising in a stacked manner a first anode layer, an anode current collector layer, a second anode layer, a separator layer, a first cathode layer, a cathode current collector layer, and a second cathode layer. Furthermore, the invention relates to a battery cell, in particular a pouch-type battery cell, comprising such an electrode assembly as well as to a battery, comprising at least one such battery cell.

Battery development has been in the focus of research for the last decades and belongs to the major challenges of modern technology. A larger number of different battery systems are nowadays known, which have specifically been designed for different growing markets, such as portable electronic devices, electric vehicles or industrial power storage devices. Depending on the application, different types of batteries have been developed to meet different requirements with regard to energy density, temperature range of operation, weight and size of the battery, lifetime or manufacturing costs.

While different types of batteries have been developed, in which low weight and high energy density can be combined, it has been found that pouch-type batteries can be manufactured at relatively low cost as well as low weight. Usually, lithium-ion type electrode assemblies comprising a cathode, an anode and a separator are accommodated within a flexible pouch made from a laminated film. The laminated film of the pouch conventionally includes an aluminum layer sandwiched between two polymer layers. While the polymer layers serve for mechanical stability and electric insulation, the aluminum layer forms a barrier against permeation of gases and moisture. By using such laminated films, the nonelectrochemically active mass of the battery can be kept at a minimum and the energy density of the battery can be increased. However, it has been found that within the electrode assemblies of such battery cells, single-sided tab cooling produces excessive temperature gradients through active areas, which may lead to areas with increased lithium incanterlation compared to the lower temperature regions. It has been estimated that a temperature gradient of only 10 to 15 K over the active areas can lead to a performance reduction of up to 20 %, while the durability of the battery may be negatively affected as well.

Such temperature gradients within the active areas of electrode assemblies so far have not been suitably addressed, since currently, cell cooling systems focus on either tab cooling, surface cooling or immersion cooling. In particular, state-of-the-art tab cooling systems rely on heat rejection through the cell tab, which does not sufficiently reduce temperature gradients in active areas. State-of-the-art surface cooling strategies involve cooling the larger surfaces of battery cells, for example pouch-cells, to extract the most amount of heat possible from the cells. The most efficient yet also most complex cooling strategies rely on immersion cooling in which battery cells are placed in fluid baths, in which the fluid has a higher convective heat transfer capability than can be achieved with the previously described two systems. The fluid bath ensures that all surfaces of the battery are cooled in the same manner, such that temperature gradients on the surfaces of battery cells can be minimized.

However, due to the thermal conductivity of the active area, if the cell architecture is single-sided, tab cooling systems can cause large temperature gradients through planes of active areas, which may lead to a reduced battery performance as well as non-homogenous ageing behavior in the respective cell. Also, surface cooling strategies impose large temperature gradients through the layers of the battery, similarly causing increased degradation due to the layers being at different temperatures and thus having different charge transfer resistances. As already briefly mentioned above, immersion cooling systems tend to be heavy and they rely on the respective fluid for drawing heat from the cells. As such, said cooling systems have to cover the entire cell rendering the resulting battery both heavier and bulkier.

It is therefore an object of the present invention to provide an improved electrode assembly for use in a battery in which the formation of temperature gradients in active areas can be reduced, thus improving performance and longevity of battery cells employing such electrode assemblies.

For this purpose and in order to solve the above-discussed object, the electrode assembly according to the present invention in its anode current collector layer and/or cathode current collector layer comprises at least two conductive layers, wherein between neighboring pairs of said conductive layers, a respective heat spreading layer is interposed. In other words, while in state-of-the-art electrode assemblies single-layer current collectors are used, according to the present invention such current collector layers are split to a fraction of their original thickness and then heat spreading layers are sandwiched between the resulting two or more conductive layers. By introducing said heat spreading layers, temperature gradients in the active area are reduced due to the improved transport of heat over and across the electrode assembly, which in turn leads to a homogenization of the temperature across the assembly.

In order to ensure an efficient heat transport within a heat spreading layer having a relatively low thickness, in particular a thickness comparable to that of the at least two conductive layers of the respective current collector layer, it is preferable that the heat spreading layer has a thermal conductivity that is larger than 200 W/(mK), preferably larger than 1000 W/(mK).

The heat spreading layer may be made from a carbon material, as carbon materials are known to combine high thermal conductivity with low weight. In particular, a pyrolytic carbon (or pyrolytic graphite), for example thermally annealed pyrolytic graphite (APG or TPG) may be used, which is a material known as such to have low weight but very high in-plane thermal conductivity of about 1700 W/(mK) at room temperature. Pyrolytic carbon may be produced by a process as conventionally known as such, for example by heating a hydrocarbon gas and growing pyrolytic graphite on a substrate (thermoplastic foil, PET, adhesive tape, etc.) using a chemical vapor deposition or impregnation process. The pyrolytic carbon may then be annealed at high temperature. Pyrolytic carbon layers are commercially available as sheet or web material.

Preferably, the heat spreading layer has a thickness between 0.5 µm and 200 µm, more preferably between 1 µm and 10 µm, in order to achieve a favorable balance between thermal conductivity and mechanical strength on the one hand and weight and volume on the other hand.

In order to provide for a good interconnection between neighboring layers in the resulting electrode assembly, the at least one heat spreading layer around its edges may be connected to its neighboring conductive layers in a gas-tight manner, preferably by welding, more preferably by laser-welding.

The introduction of the anode current collector layer and/or cathode current collector layer according to the present invention into the corresponding electrode assembly does not have any influence on the remaining layers of the resulting assembly, such that the anode layers may comprise a carbon material and/or the cathode layers may comprise an NMC 811 material, as commonly known and previously used in comparable electrode assemblies.

Similarly, the conductive layers of the anode current collector may comprise a copper material and/or the conductive layers of the cathode current collector may comprise an aluminum material, wherein it has been seen that the introduction of the heat spreading layer into an aluminum cathode current collector layer may be even easier in practice due to better diffusion properties of the resulting layer structure.

Furthermore, the separator layer may comprise a plastic material as commonly used in comparable battery cells.

According to the second aspect of the present invention, a battery cell, comprising an electrode assembly according to the present invention is disclosed. Said battery cell may be in the form of a pouch-type battery cell, wherein the electrode assembly is accommodated within a laminated film, which preferably also comprises at least one heat spreading layer. Said laminated film may thus comprise a plurality of layers, for example including first and second polymer layers, a metal barrier layer disposed between the first and second polymer layers, and a heat spreading layer made of a thermally conductive material, wherein the heat spreading layer is integrated within the laminated film such as to be disposed between the first polymer layer and the second polymer layer. Herein, a different or the same material may be used for the heat spreading layer of the pouch as compared to the electrode assembly, in particular also a pyrolytic carbon material with similar or identical thermal conductivity properties. Furthermore, at least one heat spreading layer of the electrode assembly may be connected to at least one heat spreading layer of the laminated film, such that the heat spreading layer of the pouch cell may function as a heat sink to transport the heat away from the current collector area.

Consequently, the present invention also relates to a battery, comprising at least one battery cell constructed this way. Said battery may further comprise a thermal management system adapted to control the temperature of the at least one battery cell, wherein said thermal management system may include active cooling means and/or passive cooling means.

Furthermore, the battery may be adapted to drive an electric aircraft engine, in particular an engine of an electric vertical takeoff and landing aircraft, wherein the engine is rotatable between a hover position, in which a thrust direction of the engine is substantially parallel to the vertical axis of the aircraft, and a cruise position, in which a thrust direction of the engine is substantially parallel to the longitudinal axis of the aircraft.

Further features and advantages of the present invention will become even clearer from the following description of an embodiment thereof, when taken together with the accompanying drawings. Said drawings show in particular:
- Fig. 1A: a schematic view of the layer structure of an electrode assembly known from the prior art;
- Fig. 1B: a schematic view of the layer structure of an electrode assembly according to the present invention;
- Fig. 2: a schematic cross section of a pouch-type battery cell according to an embodiment of the present invention; and
- Fig. 3: a battery according to an embodiment of the present invention, comprising a plurality of pouch-type battery cells.

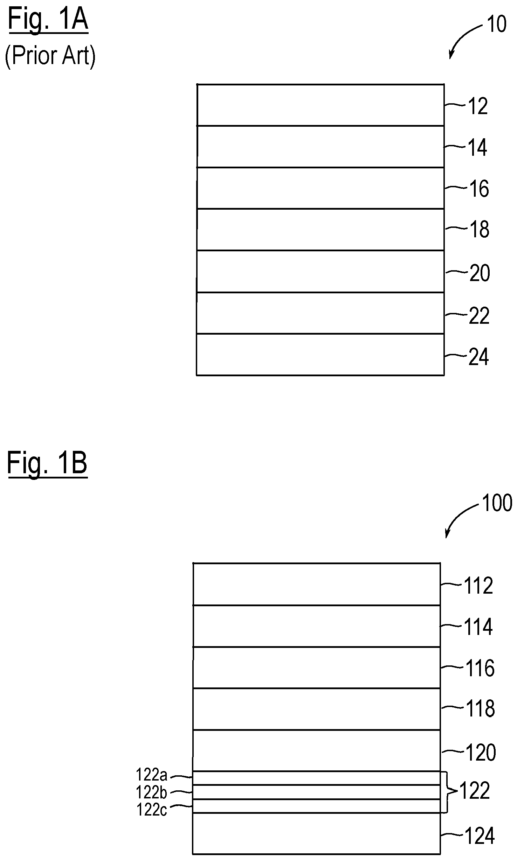

In Fig. 1A, the layer structure of an electrode assembly as known from the prior art is shown in a schematic view and generally denoted with reference numeral 10. Said electrode assembly from top to bottom comprises a first anode layer 12, an anode current collector layer 14, for example made from copper material, a second anode layer 16, wherein the first anode layer 12 and the second anode layer 16 may be made from a carbon material, a separator layer 18, for example made from a plastic material, a first cathode layer 20, a cathode current collector layer 22, for example made from an aluminum material, and a second cathode layer 24, wherein the first and second cathode layers 20 and 24 may be made from NMC 811 material. Said layers 12 to 24 can be stacked by means of manufacturing techniques which have been known in the art.

On the other hand, Fig. 1B in a similar view shows an electrode assembly according to the present invention, which is denoted with reference numeral 100 and which comprises similar layers, all referred to by the same reference numerals as in Fig. 1A, to which 100 has been added. Thus, the electrode assembly according to the present invention comprises a first anode layer 112, an anode current collector layer 114, a second anode layer 116, a separator layer 118, a first cathode layer 120, a cathode current collector layer 122 and a second cathode layer 124.

The difference between the electrode assembly 10 shown in Fig. 1A and known from the prior art and the electrode assembly 100 shown in Fig. 1B and according to the present invention is that the cathode current collector layer 122 comprises two conductive layers 122a and 122c, wherein between said conductive layers 122a and 122c, a heat spreading layer 122b is interposed. Said heat spreading layer 122b may for example be made from pyrolytic carbon material and it shall be stated in a similar way, the anode current collector layer 114 of the electrode assembly of Fig. 1B could in alternative embodiments of the present invention also be provided in a multi-layer design with at least one heat spreading layer interposed between neighboring pairs of conductive layers.

By introducing the respective heat spreading layer 122b into the cathode current collector layer 122 and/or the anode current collector layer 114, an improved distribution of heat is achieved within the active area of the electrode assembly 100 according to the present invention and temperature gradients therein are avoided or at least reduced. This leads to improved performance of the resulting battery cell as well as improved longevity thereof. It shall be stated that the present invention is also applicable to different variations of electrode assemblies, for example comprising at least two pairs of anode layers or cathode layers and additional separator layers.

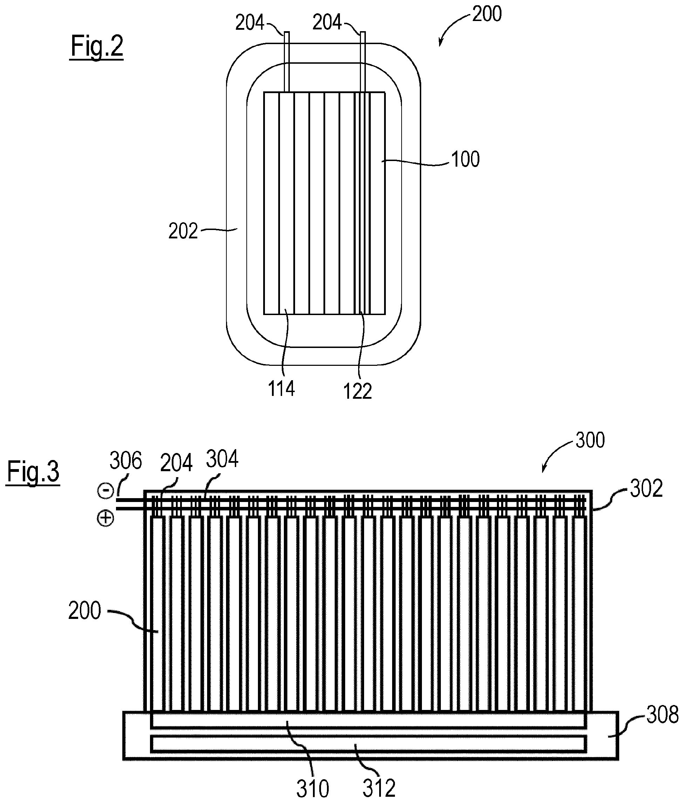

Fig. 2 shows a pouch-type battery cell 200 according to an embodiment of the present invention in a cross section view. The battery cell 200 comprises the electrode assembly 100 mentioned above in relation with Fig. 1B. In particular, the electrode assembly 100 comprises the layer structure discussed above and is preferably a lithium-ion electrode assembly or a lithium-polymer electrode assembly, the electro-chemical working principle of which is known as such in the prior art. The electrode assembly 100 is accommodated within a pouch 202 made from one or more laminated films and may in turn also comprise heat spreading layers in a similar manner as discussed above for the electrode assembly 100. Tab connectors 204 are electrically connected to the electrodes of the electrode assembly 100, in particular to the anode current collector layer 114 and to the cathode current collector 122. For that purpose, the tab connectors are provided such as to penetrate the pouch 202 to the exterior of the pouch and to allow electrical connection of the battery cell 200.

Lastly, Fig. 3 shows a battery 300 according to an embodiment of the present invention. Battery 300 comprises a plurality of pouch-type cells 200, each having a pouch 202 and an electrode assembly 100 as described above. In particular, each of the cells 200 may be configured as described above with reference to Fig. 2.

The battery cells 200 are stacked in parallel to one another such as to form a cell stack. To maintain mechanical integrity of the cell stacks, battery 300 comprises a frame or housing 302 holding the cells 200 in position and allowing handling of the battery 300 as a single unit. Furthermore, battery 300 comprises electric connection means 304 for connecting all cells 200 in parallel or in series, depending on the required characteristics of the battery, thus suitably connecting the contact tabs 204 of the cell 200 together and to battery terminals 306.

In addition, battery 300 may comprise a thermal management system 308, which includes a heat conductor 310, which is in direct contact with the pouches of all cells 200, as well as a cooling device 312 for cooling the heat conductor. The heat conductor may be a metal strip or a metal bar. The cooling device 312 may be an active cooling device such as a fan, a heat exchanger, etc., or a passive cooling device such as a plurality of cooling ribs. Alternatively, heat conductor 310 may be thermally connected to an external heat sink to transport heat away from the battery 300.

In addition, the thermal management system 308 may comprise means for monitoring and controlling the temperature, for example a temperature sensor or electronics to control an active cooling device depending on the measured temperature.

## Claims

1. Electrode assembly (100), comprising in a stacked manner:
- a first anode layer (112);
- an anode current collector layer (114);
- a second anode layer (116);
- a separator layer (118);
- a first cathode layer (120);
- a cathode current collector layer (122); and
- a second cathode layer (124);
**characterized in that** the anode current collector layer (114) and/or the cathode current collector layer (122) comprises at least two conductive layers (122a, 122c) wherein between neighbouring pairs of conductive layers (122a, 122c), a respective heat spreading layer (122b) is interposed.

2. Electrode assembly (100) according to claim 1,
wherein the at least one heat spreading layer (122b) has a thermal conductivity that is larger than 200 W/(mK), preferably larger than 1000 W/(mK).

3. Electrode assembly (100) according to claim 1 or claim 2,
wherein the at least one heat spreading layer (122b) is made from a carbon material, in particular a pyrolytic carbon material.

4. Electrode assembly (100) according to any of the preceding claims, wherein the at least one heat spreading layer (122b) has a thickness between 0.5 µm and 200 µm.

5. Electrode assembly (100) according to any of the preceding claims, wherein the at least one heat spreading layer (122b) around its edges is connected to its neighbouring conductive layers (122a, 122c) in a gas-tight manner, preferably by welding, more preferably by laser-welding.

6. Electrode assembly (100) according to any of the preceding claims, wherein the anode layers (112, 116) comprise a carbon material and/or the cathode layers (120, 124) comprise an NMC 811 material.

7. Electrode assembly (100) according to any of the preceding claims, wherein the conductive layers of the anode current collector layer (114) comprise a copper material and/or the conductive layers (122a, 122c) of the cathode current collector layer (122) comprise an aluminium material.

8. Electrode assembly (100) according to any of the preceding claims, wherein the separator layer (118) comprises a plastic material.

9. Battery cell (200), comprising an electrode assembly (100) according to any of the preceding claims.

10. Battery cell (200) according to claim 9 in the form of a pouch-type battery cell, wherein the electrode assembly (100) is accommodated within a laminated film (202)

11. Battery cell (200) according to claim 10, wherein the laminated film (202) also comprises at least one heat spreading layer.

12. Battery cell (200) according to claim 11, wherein at least one heat spreading layer (122b) of the electrode assembly (100) is connected to at least one heat spreading layer of the laminated film (202)

13. Battery (300), comprising at least one battery cell (200) according to any of claims 9 to 12.

14. Battery (300) according to claim 13,
further comprising a thermal management system (308) adapted to control temperature of the at least one battery cell (200), wherein said thermal management system (308) includes active cooling means (312) and/or passive cooling means.

15. Battery (300) according to claim 13 or claim 14,
wherein the battery (300) is adapted to drive an electric aircraft engine, in particular an engine of an electric vertical take-off and landing aircraft, wherein the engine is rotatable between a hover position, in which a thrust direction of the engine is substantially parallel to the vertical axis of the aircraft, and a cruise position, in which a thrust direction of the engine is substantially parallel to the longitudinal axis of the aircraft.
